# EUROPÄISCHE PATENTSCHRIFT

(11) **EP 1 374 235 B1**
(45) Veröffentlichungstag und Bekanntmachung des Hinweises auf die Patenterteilung: **15.11.2006**
(21) Anmeldenummer: 02726066.0
(22) Anmeldetag: 20.03.2002
(51) Int. Cl.: G11B 17/04

(54) **LAUFWERK**
DISK DRIVE
LECTEUR

(30) Priorität: 24.03.2001 DE 10114459
(43) Veröffentlichungstag der Anmeldung: 02.01.2004
(73) Patentinhaber: ROBERT BOSCH GMBH, 70442 Stuttgart (DE)
(72) Erfinder: BECKER, Volker, 31137 Hildesheim (DE); VOGT, Lothar, 31199 Barienrode (DE)
(86) Internationale Anmeldenummer: PCT/DE2002/001006
(87) Internationale Veröffentlichungsnummer: WO 2002/077991

(56) Entgegenhaltungen:
- EP-A- 0 127 584
- EP-A- 0 833 324
- US-A- 5 459 703

## Beschreibung

### Stand der Technik

Die Erfindung geht von einem Laufwerk nach der Gattung des Hauptanspruchs aus.

Es sind bereits beispielsweise als Compact Disc-Spieler ausgebildete Laufwerke bekannt, die einen Einzug für plattenförmige Speichermedien, beispielsweise für Compact Discs aufweisen. Ein solcher Einzug ist üblicherweise als Rolleneinzug mit mindestens einer Walze ausgebildet, die das abzuspielende Speichermedium in das Laufwerk einzieht oder aus diesem ausschiebt.

Die EP 833 324 A2 zeigt ein Laufwerk für plattenförmige Speichermedien, bei welchem zum Ein- bzw. Ausschub des Speichermediums ein Riemenantrieb eingesetzt wird, wobei das Speichermedium auf der einen Seite mit dem Antriebsriemen in Kontakt ist, auf der anderen Seite in einer Führungsschiene gleitet. Beim Einschieben des Speichermediums in das Gerät kommt der Antriebsriemen in Kontakt mit dem Speichermedium. Durch Betätigen des Antriebs führt der Antriebsriemen das Speichermedium in die Abspielposition.

Der Stand der Technik der US 5 459 703 zeigt ein Laufwerk mit einem Schlitten, in den das Speichermedium eingelegt wird.

Die EP 127 584 A betrifft Transportlösungen für den Werkzeugmaschinenbau.

### Vorteile der Erfindung

Das erfindungsgemäße Laufwerk mit den Merkmalen des Hauptanspruchs hat demgegenüber den Vorteil, dass der Einzug eine Gewindestange mit einer Drehachse in Einschubrichtung des Speichermediums umfaßt und dass der Gewindegang der Gewindestange mit dem Randbereich eines in den Einzug eingeführten Speichermediums derart zusammenwirkt, dass das Speichermedium durch Drehung der Gewindestange je nach Drehrichtung in das Laufwerk eingezogen oder aus dem Laufwerk ausgeschoben wird. Auf diese Weise wird ein plattenförmiges Speicher-medium nur über seine Seitenkanten im Randbereich des Speichermediums ohne Beanspruchung des Abspielbereichs mit den gespeicherten Daten in das Laufwerk eingezogen bzw. aus diesem ausgeschoben. Eine Beschädigung des Abspielbereichs des Speichermediums durch Staub- oder Schmutzpartikel, wie sie beim Einzug bzw. beim Ausschub mit einer Walze auftreten können, wird somit verhindert, ohne dass dazu ein höherer konstruktiver Aufwand erforderlich ist.

Durch die in den Unteransprüchen aufgeführten Maßnahmen sind vorteilhafte Weiterbildungen und Verbesserungen des im Hauptanspruch angegebenen Laufwerks möglich.

Besonders vorteilhaft ist es, dass die Steigung des Gewindegangs im Verhältnis zum Radius des Speichermediums so gewählt ist, dass die Gewindestange direkt mit dem Randbereich des Speichermediums bei deren Einschub in oder bei deren Ausschub aus dem Laufwerk in Eingriff kommt. Auf diese Weise ist bei einem konstruktiven Mindestaufwand eine exakte Positionierung des plattenförmigen Speichermediums beim Einschub in das bzw. beim Ausschub aus dem Laufwerk möglich, da sich das Speichermedium aufgrund des direkten Kontakts seiner Seitenkante mit dem Gewindegang der Gewindestange in definierter Lage befindet. Auf diese Weise wird außerdem eine formschlüssige Kraftübertragung bewirkt.

Besonders vorteilhaft ist auch, dass ein Führungselement mit einem Innengewinde vorgesehen ist, dass das Führungselement auf die Gewindestange aufgeschraubt und durch Drehen der Gewindestange entlang dieser bewegbar ist, dass das Führungselement eine Aufnahme umfaßt, die einen Teil des Randbereichs des zu transportierenden Speichermediums aufnimmt, so dass das Speichermedium durch Drehen der Gewindestange mittels des Führungselements je nach Drehrichtung in das Laufwerk eingezogen oder aus dem Laufwerk ausgeschoben wird.

Auf diese Weise ist ebenfalls eine formschlüssige Kraftübertragung beim Einzug des Speichermediums in das oder beim Ausschub des Speichermediums aus dem Laufwerk möglich. Außerdem wird auch auf diese Weise eine exakte Positionierung des Speichermediums beim Einzug in das Laufwerk bzw. beim Ausschub aus dem Laufwerk bewirkt, da das Speichermedium durch die Aufnahme in definierter Lage gehalten werden kann.

Ein weiterer Vorteil bei der Verwendung einer Aufnahme besteht darin, dass das Speichermedium an seiner breitesten Stelle auch über das Ende der Gewindestange hinaus verfahren werden kann, wenn die Aufnahme entsprechend versetzt am Führungselement angeordnet ist. Die Aufnahme kann dann in eine Gerätekappe des Laufwerks hinein verfahren werden und einen weiteren Ausschub des Speichermediums aus dem Laufwerk ermöglichen. Umgekehrt muss das Speichermedium vom Benutzer weniger weit in das Laufwerk eingeschoben werden, bis es von der Aufnahme zum weiteren Einschub umfaßt wird. Der Bedienkomfort wird somit für den Benutzer erhöht.

Ein weiterer Vorteil besteht darin, dass die Aufnahme mindestens ein erstes Fixierungselement zur Fixierung des Speichermediums an der Aufnahme umfaßt. Auf diese Weise wird ein Herausrutschen des Speichermediums aus der Aufnahme verhindert.

Ein weiterer Vorteil besteht darin, dass das mindestens eine Fixierungselement drehbar an der Aufnahme gelagert ist. Auf diese Weise reduzieren sich die Reibungskräfte beim Transport des Speichermediums in das oder aus dem Laufwerk. Das Speichermedium führt dann, insbesondere wenn es einen kreisförmigen Umfang aufweist, beim Transport in das oder aus dem Laufwerk eine Drehbewegung aus und wird somit nicht mittels Gleitreibung sondern mittels Rollreibung in das oder aus dem Laufwerk transportiert.

Ein weiterer Vorteil besteht darin, dass das Führungselement ein Tiefenbegrenzungselement umfaßt, das auf der einer Einzugsöffnung des Laufwerks abgewandten Seite der Aufnahme derart angeordnet ist, dass es einen Einschub des Speichermediums über die Aufnahme hinaus verhindert. Auf diese Weise wird sichergestellt, dass das Speichermedium nicht zu tief in das Laufwerk eingeschoben werden kann und nicht über die eigentliche, durch die Aufnahme definierte Fangposition hinaus gelangt.

Besonders vorteilhaft ist es, dass das Laufwerk eine Führungsschiene aufweist, in der der Randbereich des Speichermediums an seiner der Gewindestange abgewandten Seite beim Einschub in das oder beim Ausschub aus dem Laufwerk geführt ist. Auf diese Weise wird eine geradlinige Bewegung des Speichermediums beim Transport in das oder aus dem Laufwerk gewährleistet.

Ein weiterer Vorteil besteht darin, dass mindestens ein federndes Element vorgesehen ist, das die Führungsschiene beim Einschub des Speichermediums in das oder beim Ausschub des Speichermediums aus dem Laufwerk gegen das Speichermedium in Richtung zur Gewindestange drückt. Auf diese Weise wird das Speichermedium durch die Führungsschiene und die Gewindestange bzw. das auf der Gewindestange verschiebbare Führungselement in definierter Position geklemmt.

### Zeichnung

Ausführungsbeispiele der Erfindung sind in der Zeichnung dargestellt und in der nachfolgenden Beschreibung näher erläutert. Es zeigen Figur 1 eine erste Ausführungsform eines erfindungsgemäßen Laufwerks, Figur 2 eine zweite Ausführungsform des erfindungsgemäßen Laufwerks und Figur 3 eine dritte Ausführungsform des erfindungsgemäßen Laufwerks.

### Beschreibung der Ausführungsbeispiele

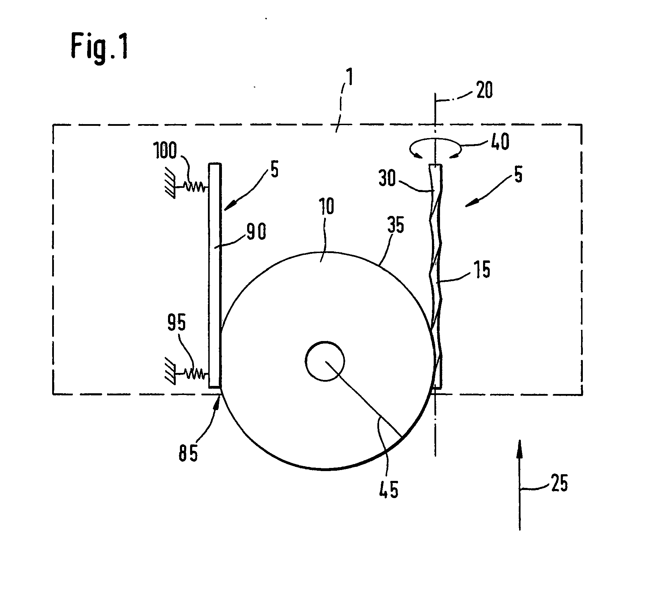

In Figur 1 kennzeichnet 1 ein Laufwerk zum Abspielen oder Aufzeichnen von plattenförmigen Speichermedien 10. Bei dem Laufwerk 1 kann es sich beispielsweise um einen Compact-Disc-Spieler, um einen Mini-Disc-Spieler, um einen DVD-Spieler (Digital Versatile Disc), um einen Compact-Disc-Wechsler, um einen MP3-Spieler (MPEG Layer 3, MPEG = Motion Picture Expert Group), oder dergleichen handeln. Das plattenförmige Speichermedium 10 ist dann in entsprechender Weise eine Compact-Disc, eine Mini-Disc, eine DVD-Disc, eine MP3-Disc oder dergleichen. Das Speichermedium 10 hat dabei in diesem Ausführungsbeispiel einen kreisförmigen Umfang. Dies ist aber nicht zwingend für die Realisierung der Erfindung. Das Laufwerk 1 umfaßt eine Einzugsöffnung 85, über die das Speichermedium 10 in das Laufwerk 1 einführbar oder aus dem Laufwerk 1 ausschiebbar ist. Das Laufwerk 1 umfaßt weiterhin eine Gewindestange 15 mit einer Drehachse 20, die in Einschubrichtung 25 des Speichermediums 10 und somit senkrecht zur Einzugsöffnung 85 des Laufwerks 1 vorliegt. Das Gewinde der Gewindestange 15 ist durch einen Gewindegang 30 definiert. Die Gewindestange 15 kann motorgetrieben sein, wobei der Motor die Gewindestange 15 um ihre Drehachse 20 in zwei entgegengesetzte Drehrichtungen 40 drehen kann. Die Gewindestange 15 ist bei einem Ende der Einzugsöffnung 85 angeordnet. Parallel zur Gewindestange 15 und dieser am anderen Ende der Einzugsöffnung 85 gegenüberliegend umfaßt das Laufwerk 1 eine Führungsschiene 90. Die Führungsschiene 90 kann über ein erstes Federelement 95 und ein zweites Federelement 100 mit dem Körper des Laufwerks 1 verbunden sein, wobei die federnden Elemente 95, 100 auf der der Gewindestange 15 abgewandten Seite der Führungsschiene 90 angeordnet sind, um die Führungsschiene 90 in Richtung zur Gewindestange 15 drücken zu können. An Stelle des ersten federnden Elementes 95 und des zweiten federnden Elementes 100 kann auch nur ein einziges federndes Element oder mehr als zwei federnde Elemente in entsprechender Weise vorgesehen sein. Durch Verwendung von mindestens zwei federnden Elementen läßt sich jedoch bereits eine besonders stabile Lagerung der Führungsschiene 90 im Laufwerk 1 bewirken, zumal wenn die beiden federnden Elemente 95, 100 wie in Figur 1 dargestellt, an den Enden der Führungsschiene 90 angeordnet sind. Die Gewindestange 15 und die Führungsschiene 90 zusammen mit dem ersten federnden Element 95 und dem zweiten federnden Element 100 gemäss Figur 1 bilden einen Einzug 5 für das Speichermedium 10.

Der Abstand der Führungsschiene 90 von der Gewindestange 15 entspricht etwa der Breite des Speichermediums 10, also bei einem Speichermedium 10 mit kreisförmigem Umfang wie in Figur 1, dem Durchmesser des Speichermediums 10. Um das Speichermedium 10 sicher und in definierter Position in das Laufwerk 1 einziehen bzw. aus dem Laufwerk 1 ausschieben zu können, ist der Abstand der Führungsschiene 90 von der Gewindestange 15 geringfügig kleiner als der Durchmesser des Speichermediums 10. Daher wird beim Einführen des Speichermediums 10 in das Laufwerk 1 über den Einzugsschacht 85 die Führungsschiene 90 zunächst leicht von der Gewindestange 15 weg gedrückt. Das Speichermedium 10 kommt somit einerseits in der Führungsschiene 90 und andererseits im Gewindegang 30 der Gewindestange 15 zum Eingriff. Dabei muss die Steigung des Gewindegangs 30 im Verhältnis zum Radius 45 des Speichermediums 10 so gewählt sein, dass der Randbereich 35 des Speichermediums 10, also die Seitenkante des Speichermediums 10 direkt mit einer Windung des Gewindeganges 30 in Eingriff kommen kann. Wird nun die Gewindestange 15 nach links um die Drehachse 20 gedreht, so wird das Speichermedium 10 über seinen Randbereich 35 durch die Gewindestange 15 ins Innere des Laufwerks 1 gezogen. Auf der der Gewindestange 15 gegenüberliegenden Seite ist der Randbereich 35 des Speichermediums 10 in der Führungsschiene 90 geführt, die aufgrund der federnden Elemente 95, 100 das Speichermedium 10 gegen die Gewindestange 15 drückt und somit einen sicheren Einschub des Speichermediums 10 in definierter Position in das Laufwerk 1 ermöglicht. Auf diese Weise kann das Speichermedium 10 exakt in die Aufnahme- oder Abspielposition im Laufwerk 1 gebracht werden. Der Ausschub des Speichermediums 10 aus dem Laufwerk 1 erfolgt entsprechend in umgekehrter Weise, wobei die Gewindestange 15 in diesem Fall nach rechts um die Drehachse 20 gedreht wird. Das Speichermedium 10 wird somit beim Transport in das oder aus dem Laufwerk 1 formschlüssig von der Gewindestange 15 erfaßt, wobei die Führungsschiene 90 eine geradlinige Bewegung des Speichermediums 10 gewährleistet.

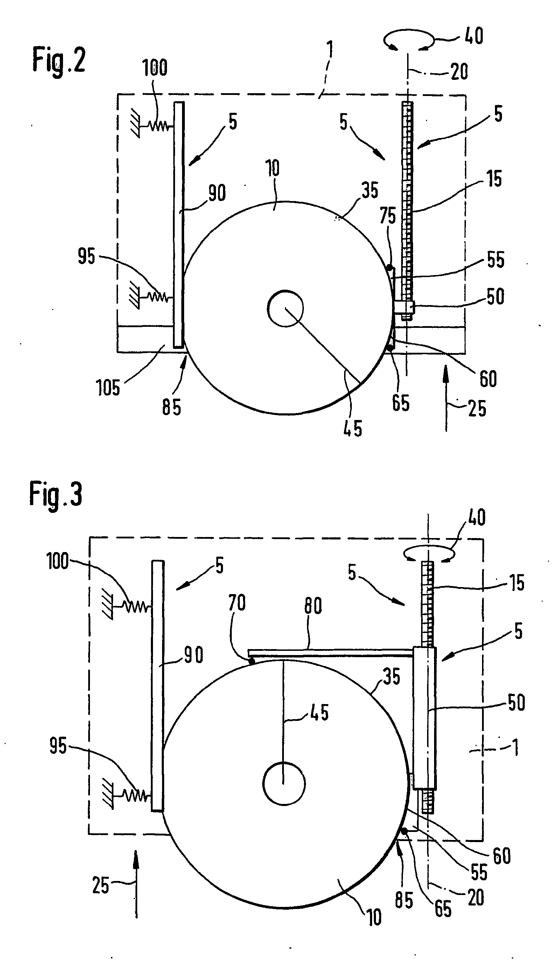

In Figur 2 ist ein zweites Ausführungsbeispiel der Erfindung dargestellt, wobei gleiche Bezugszeichen gleiche Elemente wie in der Figur 1 kennzeichnen. Im Unterschied zum ersten Ausführungsbeispiel nach Figur 1 wird das Speichermedium 10 beim zweiten Ausführungsbeispiel nach Figur 2 nicht mehr durch direkten Eingriff seines Randbereichs bzw. seiner Seitenkante 35 mit der Gewindestange 15 in das oder aus dem Laufwerk 1 transportiert, sondern über ein Führungselement 50, das mit einem Innengewinde versehen auf die Gewindestange 15 aufgeschraubt und durch Drehen der Gewindestange 15 um die Drehachse 20 entlang der Gewindestange 15 bewegbar ist. Dazu umfaßt das Führungselement 50 eine Aufnahme 55, die einen Teil der Seitenkante 35 des Speichermediums 10 aufnimmt. Der Transport des Speichermediums 10 in das oder aus dem Laufwerk 1 erfolgt somit prinzipiell in gleicher Weise wie beim ersten Ausführungsbeispiel nach Figur 1, nur dass das Speichermedium 10 nicht mehr in direktem Eingriff mit der Gewindestange 15 steht, sondern mittelbar mit dieser über die Aufnahme 55. Durch Drehen der Gewindestange 15 um die Drehachse 20 nach links wird das Führungselement 50 mit der Aufnahme 55 und damit mit dem Speichermedium 10 ins Innere des Laufwerks 1 bewegt. Bei Drehung der Gewindestange 15 um die Drehachse 20 nach rechts wird das Führungselement 50 mit der Aufnahme 55 und damit dem Speichermedium 10 aus dem Laufwerk 1 hinaus bewegt. In Figur 2 ist nun eine Gerätekappe 105 des Laufwerks 1 dargestellt, die die Einzugsöffnung 85 umfaßt. Die Führungsschiene 90 ragt gemäss Figur 2 in die Gerätekappe 105 hinein. Wenn nun die Aufnahme 55 derart zur Einzugsöffnung 85 hin am Führungselement 50 verschoben und nicht wie in Figur 2 dargestellt, symmetrisch zum Führungselement 50 angeordnet ist, so hat dies zur Folge, dass das Speichermedium 10 weiter aus der Einzugsöffnung 85 heraus geschoben werden kann, als dies bei direktem Eingriff mit der Gewindestange 15 möglich ist.

Eine in Richtung zur Einzugsöffnung 85 versetzt am Führungselement 50 angeordnete Aufnahme 55 ist im dritten Ausführungsbeispiel nach Figur 3 zu entnehmen.

Bei direktem Eingriff des Speichermediums 10 mit der Gewindestange 15 ist der Ausschubvorgang beendet, wenn das Speichermedium 10 an seiner breitesten Stelle das der Einzugsöffnung 85 zugewandte Ende der Gewindestange 15 erreicht hat. Bei entsprechend versetzt zum Führungselement 50 angeordneter Aufnahme 55 in Richtung zur Einzugsöffnung 85 kann das Speichermedium 10 jedoch auch dann noch mit Hilfe der Aufnahme 55 und der Führungsschiene 90 transportiert werden, wenn die breiteste Stelle des Speichermediums 10 das der Einzugsöffnung 85 zugewandte Ende der Gewindestange 15 in Richtung zur Einzugsöffnung 85 passiert hat. Umgekehrt kann beim Einschub des Speichermediums 10 dieses bereits frühzeitig vom Einzug 5, bzw. der Führungsschiene 90 und der Aufnahme 55 erfaßt werden, und zwar noch bevor die breiteste Stelle des Speichermediums 10 das der Einzugsöffnung 85 zugewandte Ende der Gewindestange 15 passiert. Das Einführen bzw. Entnehmen des Speichermediums 10 in das bzw. aus dem Laufwerk 1 wird somit für den Benutzer besonders komfortabel.

Die Aufnahme 55 kann dabei ebenfalls in die Gerätekappe 105 hinein verfahren werden, um diesen komfortableren Ausschub bzw. Einzug des Speichermediums 10 aus dem bzw. in das Laufwerk 1 zu ermöglichen.

Die Aufnahme 55 ist beim zweiten Ausführungsbeispiel nach Figur 2 so gestaltet, dass sie eine dem Speichermedium 10 zugewandte Vertiefung 60 umfaßt, die einen Teil der Seitenkante 35 des Speichermediums 10 formschlüssig umschließt. Die Vertiefung 60 umfaßt somit eine kreisbogenförmige Begrenzungsfläche, deren Radius dem Radius 45 des Speichermediums 10 entspricht.

Es kann nun zusätzlich vorgesehen sein, dass die Aufnahme 55 mindestens ein Fixierungselement zur Fixierung des Speichermediums 10 an der Aufnahme 55 umfaßt. Auf diese Weise kann verhindert werden, dass das Speichermedium 10 beim Transport in das oder aus dem Laufwerk 1 aus der Aufnahme 55 rutscht. Gemäss Figur 2 ist ein erstes Fixierungselement 65 und ein drittes Fixierungselement 75 vorgesehen, die jeweils an einem dem Speichermedium 10 zugewandten Ende der Aufnahme 55 angeordnet sind. Dabei können die Fixierungselemente 65,75 federnd an der Aufnahme 55 gelagert sein, so dass sie bei Einbringen des Speichermediums 10 in die Aufnahme 55 zunächst zurückfedern und dann bei in die Aufnahme 55 verbrachten Speichermedium 10 gegen dieses in Richtung der Führungsschiene 90 drücken. Mittels der beiden Fixierungselemente 65, 75 und durch Auflage des Speichermediums 10 an der Führungsschiene 90 wird das Speichermedium 10 in einer stabilen Dreipunktlagerung in definierter Position gehalten und in das bzw. aus dem Laufwerk 1 transportiert.

Zusätzlich kann nun das mindestens eine Fixierungselement bzw. können die beiden Fixierungselemente 65, 75 gemäss Figur 2 drehbar an der Aufnahme 55 gelagert sein. Auf diese Weise reduzieren sich die Reibungskräfte bei dem Transport des Speichermediums 10 in das bzw. aus dem Laufwerk 1. Die Gleitreibung des Speichermediums 10 an der Führungsschiene 90 und den Fixierungselementen 65, 75 wird dann zur Rollreibung. Die Fixierungselemente 65, 75 können dabei gegebenenfalls mit einem kreisförmigen Umfang ausgebildet sein.

In einem dritten Ausführungsbeispiel nach Figur 3 kennzeichnen wiederum gleiche Begzugszeichen gleiche Elemente wie in den vorangehenden Figuren. Dabei basiert das dritte Ausführungsbeispiel nach Figur 3 auf der zweiten Ausführungsform nach Figur 2 bzgl. des Transportmechanismus und der Verwendung des Führungselementes 50 und der Aufnahme 55. Zusätzlich umfaßt nun beim dritten Ausführungsbeispiel nach Figur 3 das Führungselement 50 ein Tiefenbegrenzungselement 80, das auf einer der Einzugsöffnung 85 des Laufwerks 1 abgewandten Seite der Aufnahme 55 angeordnet ist. Gemäss Figur 3 ist das Tiefenbegrenzungselement 80 als senkrecht zur Gewindestange 15 und zur Führungsschiene 90 verlaufender Steg ausgebildet, dessen Länge etwa der Hälfte des Abstandes zwischen der Gewindestange 15 und der Führungsschiene 90 entspricht. Gemäß Figur 3 ist das Tiefenbegrenzungselement 80 noch etwas länger als dieser halbe Abstand ausgebildet. Das Tiefenbegrenzungselement 80 ist bei der dritten Ausführungsform nach Figur 3 an einem Ende des Führungselementes 50 angeordnet. Am anderen Ende und somit versetzt in Richtung zur Einzugsöffnung 85 ist die Aufnahme 55 am Führungselement 50 angeordnet. Der Abstand zwischen der Aufnahme 55 und dem Tiefenbegrenzungselement 80 beträgt somit etwa den Radius 45 des Speichermediums 10. Dem Radius 45 entspricht dabei auch etwa die Länge des Führungselements 50 auf der Gewindestange 15. Durch diese Anordnung kann verhindert werden, dass das Speichermedium 10 über die Aufnahme 55 hinaus in das Laufwerk 1 eingeschoben werden kann. Ein weiteres Einschieben wird durch das Tiefenbegrenzungselement 80 blockiert.

Gemäss Figur 3 kann auch das Tiefenbegrenzungselement 80 eines oder mehrere Fixierungselemente zur Fixierung des Speichermediums 10 am Tiefenbegrenzungselement 80 umfassen. Gemäss Figur 3 weist dabei das Tiefenbegrenzungselement 80 an seinem dem Führungselement 50 abgewandten Ende ein zweites Fixierungselement 70 auf, das in der zum zweiten Ausführungsbeispiel nach Figur 2 beschriebenen Weise ebenfalls federnd am Tiefenbegrenzungselement 80 gelagert sein kann, um gegen das Speichermedium 10 zu drücken. Gemäss Figur 3 ist dabei nur ein Fixierungselement an der Aufnahme 55 angeordnet, nämlich das erste Fixierungselement 65 an dem der Einzugsöffnung 85 zugewandten Ende der Aufnahme 55. Somit wird bei der dritten Ausführungsform nach Figur 3 das Speichermedium 10 durch das erste Fixierungselement 65, das zweite Fixierungselement 70 und die Führungsschiene 90 in einer stabilen Dreipunktlagerung gehalten und kann auf diese Weise in definierter Position in das bzw. aus dem Laufwerk 1 transportiert werden. Wenn das zweite Fixierungselement 70 drehbar am Tiefenbegrenzungselement 80 gelagert ist und wenn das erste Fixierungselement 65 drehbar an der Aufnahme 55 gelagert ist, so kann die bereits zum zweiten Ausführungsbeispiele nach Figur 2 beschriebene Rollreibung beim Transport des Speichermediums 10 in das bzw. aus dem Laufwerk 1 erzielt werden.

Auch das zweite Fixierungselement 70 kann beispielsweise mit kreisförmigem Umfang versehen sein. Weiterhin kann auch bei der dritten Ausführungsform nach Figur 3 an der Aufnahme 55 zusätzlich oder alternativ zum ersten Fixierungselement 65 auch das dritte Fixierungselement 75 an dem der Einzugsöffnung 85 abgewandten Ende der Aufnahme 55 wie bei Figur 2 beschrieben angeordnet sein.

Das erfindungsgemäße Laufwerk 1 eignet sich besonders für den mobilen Einsatz, beispielsweise in Kraftfahrzeugen, da es konstruktiv wenig aufwendig und damit platzsparend ausgeführt werden kann.

## Patentansprüche

1. Laufwerk (1) mit einem Einzug (5) für plattenförmige Speichermedien (10), **dadurch gekennzeichnet, dass** der Einzug (5) eine Gewindestange (15) mit einer Drehachse (20) in Einschubrichtung (25) des Speichermediums (10) umfaßt und dass der Gewindegang (30) der Gewindestange (15) mit dem Randbereich (35) eines in den Einzug (5) eingeführten Speichermediums (10) derart zusammenwirkt, dass das Speichermedium (10) durch Drehung der Gewindestange (15) je nach Drehrichtung (40) in das Laufwerk (1) eingezogen oder aus dem Laufwerk (1) ausgeschoben wird.

2. Laufwerk (1) nach Anspruch 1, **dadurch gekennzeichnet, dass** die Steigung des Gewindegangs (30) im Verhältnis zum Radius (45) des Speichermediums (10) so gewählt ist, dass die Gewindestange (15) direkt mit dem Randbereich (35) des Speichermediums (10) bei deren Einschub in oder bei deren Ausschub aus dem Laufwerk (1) in Eingriff kommt.

3. Laufwerk (1) nach Anspruch 1, **dadurch gekennzeichnet, dass** ein Führungselement (50) mit einem Innengewinde vorgesehen ist, dass das Führungselement (50) auf die Gewindestange (15) aufgeschraubt und durch Drehen der Gewindestange (15) entlang dieser bewegbar ist, dass das Führungselement (50) eine Aufnahme (55) umfaßt, die einen Teil des Randbereichs (35) des zu transportierenden Speichermediums (10) aufnimmt, so dass das Speichermedium (10) durch Drehen der Gewindestange (15) mittels des Führungselementes je nach Drehrichtung (40) in das Laufwerk (1) eingezogen oder aus dem Laufwerk (1) ausgeschoben wird.

4. Laufwerk (1) nach Anspruch 3, **dadurch gekennzeichnet, dass** die Aufnahme (55) eine einem zu transportierenden Speichermedium (10) zugewandte Vertiefung (60) umfaßt, die einen Teil des Randbereichs (35) des Speichermediums (10) formschlüssig umschließt.

5. Laufwerk (1) nach Anspruch 4, **dadurch gekennzeichnet, dass** die Aufnahme (55) mindestens ein erstes Fixierungselement (65, 75) zur Fixierung des Speichermediums (10) an der Aufnahme (55) umfaßt.

6. Laufwerk (1) nach Anspruch 5, **dadurch gekennzeichnet, dass** das mindestens eine erste Fixierungselement (65, 75) drehbar an der Aufnahme (55) gelagert ist.

7. Laufwerk (1) nach Anspruch 5 oder 6, **dadurch gekennzeichnet, dass** das mindestens eine erste Fixierungselement (65, 75) an einem Ende der Aufnahme (55) angeordnet ist.

8. Laufwerk (1) nach einem der Ansprüche 3 bis 7, **dadurch gekennzeichnet, dass** das Führungselement (50) ein Tiefenbegrenzungselement (80) umfaßt, das auf der einer Einzugsöffnung (85) des Laufwerks (1) abgewandten Seite der Aufnahme (55) derart angeordnet ist, dass es einen Einschub des Speichermediums (10) über die Aufnahme (55) hinaus verhindert.

9. Laufwerk (1) nach Anspruch 8, **dadurch gekennzeichnet, dass** das Tiefenbegrenzungselement (80) mindestens ein zweites Fixierungselement (70) zur Fixierung des Speichermediums (10) am Tiefenbegrenzungselement (80) umfaßt.

10. Laufwerk (1) nach Anspruch 9, **dadurch gekennzeichnet, dass** das mindestens eine zweite Fixierungselement (70) drehbar an dem Tiefenbegrenzungselement (80) gelagert ist.

11. Laufwerk (1) nach Anspruch 9 oder 10, **dadurch gekennzeichnet, dass** das mindestens eine zweite Fixierungselement (70) an einem Ende des Tiefenbegrenzungselementes (80) angeordnet ist.

12. Laufwerk (1) nach einem der vorherigen Ansprüche, **dadurch gekennzeichnet, dass** das Laufwerk (1) eine Führungsschiene (90) aufweist, in der der Randbereich (35) des Speichermediums (10) an seiner der Gewindestange (15) abgewandten Seite beim Einschub in das oder beim Ausschub aus dem Laufwerk (1) geführt ist.

13. Laufwerk (1) nach Anspruch 12, **dadurch gekennzeichnet, dass** mindestens ein federndes Element (95, 100) vorgesehen ist, das die Führungsschiene (90) beim Einschub des Speichermediums (10) in das oder beim Ausschub des Speichermediums (10) aus dem Laufwerk (1) gegen das Speichermedium (10) in Richtung zur Gewindestange (15) drückt.

## Claims

1. Drive (1) having a pulling-in device (5) for storage media (10) in the form of discs, **characterized in that** the pulling-in device (5) comprises a threaded rod (15) with a rotation axis (20) in the pushing-in direction (25) of the storage medium (10), and **in that** the thread pitch (30) of the threaded rod (15) interacts with the edge area (35) of a storage medium (10) which is inserted into the pulling-in device (5), in such a manner that the storage medium (10) is pulled into the drive (1), or is pushed out of the drive (1), by rotation of the threaded rod (15), depending on the rotation direction (40).

2. Drive (1) according to Claim 1, **characterized in that** the gradient of the thread pitch (30) is chosen with respect to the radius (45) of the storage medium (10) such that the threaded rod (15) engages directly with the edge area (35) of the storage medium (10) when it is being pushed into or pushed out of the drive (1).

3. Drive (1) according to Claim 1, **characterized in that** a guide element (50) having an internal thread is provided, **in that** the guide element (50) is screwed onto the threaded rod (15), and can be moved along it by rotation of the threaded rod (15) **in that** the guide element (50) has a holder (55), which holds a part of the edge area (35) of the storage medium (10) to be transported, such that the storage medium (10) is pulled into the drive (1) or is pushed out of the drive (1), depending on the rotation direction (40), by rotation of the threaded rod (15) by means of the guide element.

4. Drive (1) according to Claim 3, **characterized in that** the holder (55) has a depression (60) which faces a storage medium (10) to be transported and surrounds a part of the edge area (35) of the storage medium (10) in an interlocking manner.

5. Drive (1) according to Claim 4, **characterized in that** the holder (55) has at least one first fixing element (65, 75) for fixing the storage medium (10) on the holder (55).

6. Drive (1) according to Claim 5, **characterized in that** the at least one first fixing element (65, 75) is mounted on the holder (55) such that it can rotate.

7. Drive (1) according to Claim 5 or 6, **characterized in that** the at least one first fixing element (65, 75) is arranged at one end of the holder (55).

8. Drive (1) according to one of Claims 3 to 7, **characterized in that** the guide element (50) has a depth-limiting element (80), which is arranged on that side of the holder (55) which faces away from a pulling-in opening (85) in the drive (1), in such a manner that it prevents the storage medium (10) from being pushed in beyond the holder (55).

9. Drive (1) according to Claim 8, **characterized in that** the depth-limiting element (80) has at least one second fixing element (70) for fixing the storage medium (10) on the depth-limiting element (80).

10. Drive (1) according to Claim 9, **characterized in that** the at least one second fixing element (70) is mounted on the depth-limiting element (80) such that it can rotate.

11. Drive (1) according to Claim 9 or 10, **characterized in that** the at least one second fixing element (70) is arranged at one end of the depth-limiting element (80).

12. Drive (1) according to one of the preceding claims, **characterized in that** the drive (1) has a guide rail (90), in which the edge area (35) of the storage medium (10) is guided on its side facing away from the threaded rod (15), while being pushed into or being pushed out of the drive (1).

13. Drive (1) according to Claim 12, **characterized in that** at least one sprung element (95, 100) is provided and presses the guide rail (90) against the storage medium (10) in the direction of the threaded rod (15) while the storage medium (10) is being pushed into the drive (1), or the storage medium (10) is being pushed out of the drive (1).

## Revendications

1. Lecteur (1) comportant un dispositif de chargement (5) pour des supports d'enregistrement (10) en forme de disque,
**caractérisé en ce que**
le dispositif de chargement (5) comprend une tige filetée (15) présentant un axe de rotation (20) dans la direction d'insertion (25) du support d'enregistrement (10) et le filet hélicoïdal (30) de la tige filetée (15) coopère avec la bordure (35) d'un support d'enregistrement (10) introduit dans le dispositif de chargement (5), de telle sorte que le support d'enregistrement (10), du fait de la rotation de la tige filetée (15), est chargé dans le lecteur (1) ou en est extrait en fonction de la direction de rotation (40).

2. Lecteur (1) selon la revendication 1,
**caractérisé en ce que**
le pas du filet hélicoïdal (30) est choisi par rapport au rayon (45) du support d'enregistrement (10) de telle sorte que la tige filetée (15) s'engage directement avec la bordure (35) du support d'enregistrement (10) lors de son insertion dans le lecteur (1) ou de son extraction de celui-ci.

3. Lecteur (1) selon la revendication 1,
**caractérisé en ce qu'**
un élément de guidage (50), présentant un taraudage, est vissé sur la tige filetée (15) et est mobile le long de celle-ci du fait de la rotation de la tige filetée (15),
l'élément de guidage (50) comporte un logement (55) recevant une partie de la bordure (35) du support d'enregistrement (10) à transporter de sorte que le support d'enregistrement (10) est chargé dans le lecteur (1) ou en est extrait du fait de la rotation de la tige filetée (15) au moyen de l'élément de guidage (50), en fonction de la direction de rotation (40).

4. Lecteur (1) selon la revendication 3,
**caractérisé en ce que**
le logement (55) comporte un renfoncement (60),tourné vers le support d'enregistrement (10) à transporter, ce renfoncement entourant par complémentarité de forme une partie de la bordure (35) du support d'enregistrement (10).

5. Lecteur (1) selon la revendication 4,
**caractérisé en ce que**
le logement (55) comporte au moins un premier élément de fixation (65, 75) pour fixer le support d'enregistrement (10) au logement (55).

6. Lecteur (1) selon la revendication 5,
**caractérisé en ce qu'**
au moins un premier élément de fixation (65, 75) est monté en rotation sur le logement (55).

7. Lecteur (1) selon la revendication 5 ou 6,
**caractérisé en ce qu'**
au moins un premier élément de fixation (65, 75) est disposé à une extrémité du logement (55).

8. Lecteur (1) selon l'une des revendications 3 à 7,
**caractérisé en ce que**
l'élément de guidage (50) comporte un élément de délimitation de la profondeur (80) disposé sur le côté du logement (55) opposé à une ouverture de chargement (85) du lecteur (1) pour empêcher que le support d'enregistrement (10) ne soit inséré au-delà du logement (55).

9. Lecteur (1) selon la revendication 8,
**caractérisé en ce que**
l'élément de délimitation de la profondeur (80) comprend au moins un deuxième élément de fixation (70) pour fixer le support d'enregistrement (10) à l'élément de délimitation de la profondeur (80).

10. Lecteur (1) selon la revendication 9,
**caractérisé en ce qu'**
au moins un deuxième élément de fixation (70) est monté en rotation sur l'élément de délimitation de la profondeur (80).

11. Lecteur (1) selon la revendication 9 ou 10,
**caractérisé en ce qu'**
au moins un deuxième élément de fixation (70) est disposé à une extrémité de l'élément de délimitation de la profondeur (80).

12. Lecteur (1) selon l'une des revendications précédentes,
**caractérisé en ce que**
le lecteur (1) présente un rail de guidage (90) dans lequel la bordure (35) du support d'enregistrement (10) est guidée sur son côté opposé à la tige filetée (15) lors de l'insertion dans le lecteur (1) ou de l'extraction de celui-ci.

13. Lecteur (1) selon la revendication 12,
**caractérisé en ce qu'**
on prévoit au moins un élément résilient (95, 100) qui, lors de l'insertion ou de l'extraction du support d'enregistrement (10) dans le lecteur (1) presse le rail de guidage (90) contre le support d'enregistrement (10) dans la direction de la tige filetée (15).
